# EUROPÄISCHE PATENTSCHRIFT

(11) **EP 3 576 001 B1**
(45) Veröffentlichungstag und Bekanntmachung des Hinweises auf die Patenterteilung: **23.06.2021**
(21) Anmeldenummer: 19175542.0
(22) Anmeldetag: 21.05.2019
(51) Int. Cl.: G06F 21/62

(54) **COMPUTERIMPLEMENTIERTES VERFAHREN ZUM ÜBERGEBEN EINES DATENSTRINGS VON EINER ANWENDUNG AN EINE DATENSCHUTZEINRICHTUNG**
COMPUTER-IMPLEMENTED METHOD FOR TRANSFERRING A DATA STRING FROM AN APPLICATION TO A DATA PROTECTION DEVICE
PROCÉDÉ MIS EN OEUVRE PAR ORDINATEUR PERMETTANT DE TRANSFÉRER UNE CHAÎNE DE DONNÉES À PARTIR D'UNE APPLICATION VERS UN DISPOSITIF DE PROTECTION DES DONNÉES À CARACTÈRE PERSONNEL

(30) Priorität: 28.05.2018 DE 102018112742
(43) Veröffentlichungstag der Anmeldung: 04.12.2019
(73) Patentinhaber: Comforte AG, 65189 Wiesbaden (DE)
(72) Erfinder: HORST, Henning, 86874 Tussenhausen/ Zaisertshofen (DE); HORST, Michael, 16816 Wuthenow (DE)
(74) Vertreter: WSL Patentanwälte Partnerschaft mbB

(56) Entgegenhaltungen:
- WO-A1-2016/064888
- US-A1- 2012 278 621
- US-A1- 2017 295 236

## Beschreibung

Die vorliegende Erfindung betrifft ein computerimplementiertes Verfahren zum Übergeben eines Datenstrings von einer Anwendung an eine Datenschutzeinrichtung.

Aus dem Stand der Technik sind Datenschutzeinrichtungen in mannigfaltigen Ausführungsformen und Varianten bekannt. Solche Datenschutzeinrichtungen dienen dazu, Teile von in einer Anwendung zu verarbeitenden Daten einer Datenschutzoperation zu unterziehen. Ein Beispiel für eine solche Datenschutzoperation ist beispielsweise das Ersetzen einer Kreditkartennummer als Datenstring in einem Datensatz durch einen Token als Platzhalter, welcher einem Angreifer keinen Rückschluss auf die eigentliche Kartennummer ermöglicht. Weitere Beispiele einer Datenschutzoperation sind das Generieren eines Hashwertes oder die Validierung einer Geheimnummer (PIN) wie bei Kartenzahlungen üblich.

Um die notwendige Sicherheit der Datenschutzoperation zu gewährleisten, wird diese typischerweise außerhalb der eigentlichen Anwendung ausgeführt. Eine solche Trennung zwischen der Anwendung für die Datenverarbeitung und der Datenschutzeinrichtung für das Ausführen der Datenschutzoperation ermöglicht es zudem, sehr komplexe Datenschutzoperationen zu implementieren, ohne die Anwendung zu belasten.

Allerdings muss der Datenstring, auf welchen die Datenschutzoperation angewandt werden soll, von der Anwendung an die Datenschutzeinrichtung übergeben werden, wobei die Datenschutzeinrichtung einen Antwortstring zurück an die Anwendung übergeben muss. Zu diesem Zweck verfügen bekannte Datenschutzeinrichtungen über für die jeweilige Datenschutzeinrichtung proprietäre und häufig hochkomplexe, z.B. PKCS#11, Programmierschnittstellen, welche den Programmierern der jeweiligen Anwendung zur Verfügung stehen, um die Übergabe des Datenstrings an die Datenschutzeinrichtung in der Anwendung zu implementieren. Häufig soll jedoch eine Datenschutzeinrichtung für eine Vielzahl von in verschiedenen Sprachen programmierten Anwendungen bereitgestellt werden. In diesem Fall müsste dann für jede Programmiersprache einer jeweiligen Anwendung eine eigene Programmierschnittstelle von dem Hersteller der Datenschutzeinrichtung bereitgestellt werden. Aufgrund der Komplexität und des Aufwands für den Hersteller der Datenschutzeinrichtung ist dies allerdings keine marktübliche Vorgehensweise. Als Resultat bleibt dem Nutzer der Datenschutzeinrichtung üblicherweise keine Möglichkeit, die Datenschutzeinrichtung auf einfache Art und Weise von allen Anwendungen aus zu benutzen. Des Weiteren ist es dem Benutzer üblicherweise nicht einfach möglich, von einer Datenschutzeinrichtung eines Herstellers zu einer Datenschutzeinrichtung eines anderen Herstellers zu wechseln, da die Programmierschnittstellen komplett verschieden sind. Auch der PKCS#11 Standard hat nicht zu einer echten Vereinheitlichung beigetragen, da er hochkomplex ist, üblicherweise auch für jedes Betriebssystem einer speziellen Bibliothek bedarf und somit verhältnismäßig wenig adaptiert wurde.

Die US 2017/0295236 A1 offenbart einen Datenbankproxy mit einem Anfrageprozessor, einem Cache, einem Datenbank-Plug-In und Schnittstellen zum Verbinden mit Datenbankproxyclients und den Datenbankservern. Der Anfrageprozessor ist so eingerichtet, dass er eine Leseanfrage von einem Client empfängt, bestimmt, ob die Leseanfrage dem Datenbankproxy zugeordnet ist und Ergebnisse der Leseanfrage an den Client zurückgibt. Wenn die Leseanfrage nicht dem Datenbankproxy zugeordnet ist, wird die Leseanfrage an einen weiteren Datenbankproxy weitergegeben. Wenn die Leseanfrage dem Datenbankproxy zugeordnet ist, wird die Leseanfrage unter Verwendung von in dem Cache gespeicherten Daten verarbeitet, wenn die Ergebnisse in dem Cache gespeichert sind, oder an das Datenbank-Plug-In weitergeleitet, welches die Leseanfrage an den Datenbankserver weiterleitet, die Ergebnisse von dem Datenbankserver empfängt und die Ergebnisse an den Anfrageprozessor zum Speichern in dem Cache zurückgibt.

Aus der WO 2016/064888 A1 ist eine Gateway-Einrichtung zum Implementieren von Datensicherheit offenbart. Die Gateway-Einrichtung ist zwischen einem Client und einem Server geschaltet und so eingerichtet, dass sie codierte Daten und einen Satz von Operationen von dem Server als Reaktion auf eine Anfrage für Cloud-Dienste von dem Client erhält. Die Gateway-Einrichtung ist so eingerichtet, dass sie die codierten Daten decodiert und die decodierten Daten und den Satz von Operationen dem Client bereitstellt. Der Client ist so eingerichtet, dass er den Satz von Operationen auf die decodierten Daten anwendet und die Ergebnisse der Operation in eine Anwendung oder eine Schnittstelle, die dem angefragten Cloud-Dienst entspricht, einbettet. Die Gateway-Einrichtung ist so eingerichtet, dass sie die Ergebnisdaten der Operation codiert und die codierten Ergebnisdaten der Operation dem Server zum Speichern zur Verfügung stellt.

Daher ist es Aufgabe der vorliegenden Erfindung, ein computerimplementiertes Verfahren zum Übergeben eines Datenstrings von einer Anwendung an eine Datenschutzeinrichtung zu schaffen, welches
- einfach benutzbar und begreifbar ist,
- einem in der Computerindustrie bereits etablierten und bekannten Muster folgt und/oder
- es dem Nutzer erlaubt, auf bestehende (herstellerfremde) Standardimplementierungen zurück zu greifen, und es somit auf Seiten des Herstellers der Datenschutzeinrichtung überflüssig macht, eine Vielzahl von Programmierschnittstellen für unterschiedliche Sprachen bereitzustellen.

Erfindungsgemäß wird zumindest eine dieser Aufgaben durch ein computerimplementiertes Verfahren zum Übergeben eines Datenstrings von einer Anwendung an eine Datenschutzeinrichtung gelöst, wobei das Verfahren die Schritte aufweist Generieren einer Datenbankabfrage in der Anwendung, wobei die Datenbankabfrage den Datenstring enthält und wobei die Datenbankabfrage in einer Datenbanksprache codiert ist, Übermitteln der Datenbankabfrage von der Anwendung an einen Emulator, Umsetzen der Datenbankabfrage in einen Datenschutzauftrag in dem Emulator, wobei der Datenschutzauftrag den Datenstring enthält und wobei der Datenschutzauftrag in einer anderen Sprache als der Datenbanksprache codiert ist, wobei die andere Sprache eine von der Datenschutzeinrichtung interpretierbare Sprache ist, Übermitteln des Datenschutzauftrags von dem Emulator an die Datenschutzeinrichtung, Anwenden einer Datenschutzoperation auf den Datenstring und Ausgeben eines Antwortstrings in der Datenschutzeinrichtung, Übermitteln des Antwortstrings von der Datenschutzeinrichtung an den Emulator und Ausgeben des Antwortstrings von dem Emulator an die Anwendung in Form eines in der Datenbanksprache codierten Ergebnisses der Datenbankabfrage.

Die grundlegende Idee der vorliegenden Erfindung ist es, statt einer Vielzahl von Programmierschnittstellen (genauer Schnittstellen zur Anwendungsprogrammierung, API (Englisch: Application Programming Interface)) in einer Vielzahl von Zielsprachen bereitzustellen, greift das erfindungsgemäße Verfahren auf die in vielen Programmiersprachen auch verfügbaren Programmierschnittstellen für eine Datenbank zurück, wobei in dem Emulator eine Umsetzung der Datenbankabfrage in der Sprache der jeweiligen Datenbank (Datenbanksprache) in eine andere Sprache als der Datenbanksprache erfolgt. Aus Sicht der Anwendung sieht der Aufruf einer Datenschutzoperation nicht anders aus als jede andere Datenbankabfrage für die durch die Datenbanksprache definierte Datenbank. Die andere Sprache, in welcher die Datenbankabfrage umgesetzt wird, ist typischerweise diejenige Sprache, in welcher die Datenschutzeinrichtung implementiert ist.

In einer Ausführungsform wird die Datenbankabfrage in der Anwendung in einer zu der Programmiersprache der Anwendung kompatiblen Codierung generiert. Zu diesem Zweck stellen die Datenbankhersteller Programmierschnittstellen für eine Vielzahl von Programmiersprachen, die zum Programmieren von Anwendungen verwendet werden, zur Verfügung.

In einer Ausführungsform der Erfindung wandelt eine solche Programmierschnittstelle die kompatibel mit der Anwendung codierte Datenbankabfrage aus der Anwendung in eine typischerweise einheitliche, von einem Datenbankbackend interpretierbare Codierung um. Beispielsweise ist die von dem Datenbankbackend interpretierbare Codierung ein für das Datenbankbackend spezifisches Protokoll für die Übermittlung der Datenbankabfragen über ein Netzwerk. Bei einer herkömmlichen Datenbankabfrage würde nun die Datenbankabfrage in der von dem Datenbankbackend interpretierbaren Codierung, insbesondere über ein Netzwerk, an das Datenbankbackend übermittelt. Erfindungsgemäß tritt in einer Ausführungsform der Emulator an die Stelle des Datenbankbackends. Dabei umfasst das Umsetzen in dem Emulator ein Umsetzen der Datenbankabfrage in der von dem Datenbankbackend interpretierbaren Codierung in den Datenschutzauftrag in einer von der Sprache der Datenbankanfrage verschiedenen Sprache. Es versteht sich, dass diese von der Datenbanksprache verschiedene Sprache eine von der Datenschutzeinrichtung interpretierbare Sprache ist.

Bei einer derartigen Ausgestaltung der Umsetzung erfolgt auch das Umsetzen des Antwortstrings von der Datenschutzeinrichtung zweistufig. In dem Emulator wird zunächst der Antwortstring in der anderen Sprache in die von dem Datenbankbackend und der Programmierschnittstelle interpretierbare Codierung umgesetzt. Abschließend wird der Antwortstring in der Programmierschnittstelle in die mit der Anwendung kompatible Codierung umgesetzt und an die Anwendung ausgegeben.

Die beschriebenen Ausführungsformen verdeutlichen, dass der Vorteil der Emulation darin liegt, dass die Datenschutzeinrichtung nur eine einzige Schnittstelle zur Sprache des Datenbankbackends bereitstellen muss, während für die Anbindung an die verschiedenen Sprachen zur Anwendungsprogrammierung auf die Programmierschnittstellen des Datenbankherstellers oder -anbieters zurückgegriffen werden kann.

Es versteht sich, dass die Information des Datenstrings, welcher der Datenschutzoperation unterzogen werden soll, bei der Übergabe, d.h. insbesondere bei dem Umsetzen zwischen der Datenbanksprache und der Sprache der Datenschutzeinrichtung, erhalten bleiben muss.

Unter einem Datenstring im Sinne der vorliegenden Anmeldung wird jedwede Art von Zeichenfolge verstanden. Ein Datensatz setzt sich aus einem oder mehreren solcher Datenstrings zusammen. Dabei können die Datenstrings in einem Datensatz voneinander abgesetzt oder auf sonstige Weise markiert sein, sie müssen es aber nicht. Insbesondere kann ein Datensatz aus einer einzigen Zeichenfolge bestehen, die eine Mehrzahl von Datenstrings umfasst. Eine Ausgestaltung eines Datensatzes im Sinne der vorliegenden Erfindung ist eine Nachricht, welche den Datenstring oder den Antwortstring umfasst.

Ein Datensatz kann in einer Ausführungsform eine Nachricht sein, welche eine Finanztransaktion beschreibt, wobei die Nachricht beispielsweise Informationen über Ort, Gegenstand und Preis der Transaktion enthält.

Eine Anwendung im Sinne der vorliegenden Anmeldung ist irgendeine Einrichtung, insbesondere aber ein Programm oder ein Programmabschnitt, welcher vorzugsweise einen Datensatz verarbeitet und in diesem beispielsweise ein Ersetzen des Datenstrings durch den Platzhalter und umgekehrt durchführt.

In weiteren Ausführungsform erfolgt das Übermitteln der Datenbankabfrage von der Anwendung an den Emulator und/oder von dem Emulator an die Datenschutzeinrichtung und/oder umgekehrt über eine Netzwerkverbindung mit einem Protokoll zur Sicherung der Daten, welches die Integrität der Daten schützt und/oder eine sichere Authentifizierung zumindest auf der Seite der Datenschutzeinrichtung ermöglicht und/oder gegen unbefugtes Mitlesen schützt. Ein Protokoll, welches diese Anforderungen erfüllt ist beispielsweise SSH.

Die vorliegende Erfindung ist grundsätzlich für alle Typen von Datenbanksprachen geeignet. In einer Ausführungsform jedoch ist die Datenbanksprache eine NoSQL-Sprache, vorzugsweise eine Sprache für eine Schlüssel-Werte-Datenbank. Derartige Schlüssel-Werte-Datenbanken haben den Vorteil einer einfachen Syntax der zugehörigen Datenbanksprache und der vergleichsweise einfachen Umsetzung, d.h. Emulation in dem Emulator, und der daraus resultierenden Performanz und Skalierbarkeit. In einer Ausführungsform der Erfindung ist die Schlüssel-Werte-Datenbank, deren Datenbanksprache in der Anwendung zur Übergabe des Datenstrings zur Verwendung kommt, eine In-Memory-Datenbank, beispielsweise Redis. Schlüssel-Werte-Datenbanken erlauben es, Paare von Schlüsseln und Werten zu speichern und wieder abzurufen, wobei die Werte auf die Datenbankanfrage hin aus dem Cache des Rechners bereitgestellt werden.

Es versteht sich, dass diese im Emulator implementierte Emulation der Datenbank nur gegenüber der Anwendung sichtbar ist, der Emulator stattdessen aber eine Umsetzung in der Datenbanksprache codierten Datenbankabfrage in die Sprache der Datenschutzeinrichtung bereitstellt.

Schlüssel-Werte-Datenbanken bzw. deren Datenbanksprache sind für die vorliegende Erfindung deshalb gut geeignet, da insbesondere dann, wenn mit Hilfe der Datenschutzoperation der Datenstring durch einen Token oder einer anderen Platzhalter ersetzt wird, die Datenstruktur der Schlüssel-Werte-Datenbank zu dem Problem des Ersetzens des Datenstrings durch einen Platzhalter passt.

In einer alternativen Ausführungsform ist die Datenbanksprache SQL, so wie sie in relationalen Datenbanken zum Einsatz kommt.

In einer Ausführungsform der Erfindung wird zusätzlich zu der Übergabe des Datenstrings von der Anwendung an die Datenschutzeinrichtung mit Hilfe der Datenbankabfrage auch ein in der Datenbanksprache codierter Konfigurationsparameter für die Datenschutzoperation von der Anwendung an die Datenschutzeinrichtung übergeben. Dazu gibt es erfindungsgemäß zwei alternative Varianten.

In der ersten Variante wird der Konfigurationsparameter für die Datenschutzoperation in die Datenbankabfrage, welche den Datenstring für die Datenschutzeinrichtung enthält, eingefügt, wobei in dem Emulator die Datenbankabfrage dann so umgesetzt wird, dass ein Datenschutzkonfigurationsbefehl mit dem Konfigurationsparameter gebildet wird, wobei der Datenschutzkonfigurationsbefehl in der anderen Sprache als der Datenbanksprache, insbesondere in der Sprache der Datenschutzeinrichtung, codiert ist. Abschließend wird der so generierte Datenschutzkonfigurationsbefehl von dem Emulator an die Datenschutzeinrichtung übermittelt und die Datenschutzoperation mit einer durch den Konfigurationsparameter vorgegebenen Konfiguration auf den Datenstring angewandt.

In einer zweiten Variante wird ein Datenbankkonfigurationsbefehl in der Anwendung generiert, welcher zunächst einmal unabhängig von der Datenbankabfrage ist, wobei der Datenbankkonfigurationsbefehl den Konfigurationsparameter für die Datenschutzoperation enthält. Dabei ist wie zuvor der Datenbankkonfigurationsbefehl in der Datenbanksprache codiert. Dieser Datenbankkonfigurationsbefehl wird dann von der Anwendung an den Emulator übermittelt und dort in einen Datenschutzkonfigurationsbefehl mit dem Konfigurationsparameter umgesetzt. Es versteht sich, dass auch in dieser Variante der Datenschutzkonfigurationsbefehl in der anderen Sprache, d.h. der gleichen Sprache wie der Datenschutzauftrag, codiert ist.

In einer Ausführungsform der Erfindung wird der Emulator als Proxy in einem Datennetzwerk ausgeführt, wobei die Anwendung und die Datenschutzeinrichtung weitere Elemente des gleichen Netzwerks sind.

Die Realisierung des computerimplementierten Verfahrens gemäß der vorliegenden Erfindung ist insbesondere dann sinnvoll, wenn die Datenschutzeinrichtung auf spezieller Hardware implementiert ist. Zwar lassen sich auch für derartige spezielle Hardware Programmierschnittstellen in unterschiedlichen Zielsprache bereitstellen, jedoch sind diese für den Anwendungsprogrammierer nur schwer zu handhaben. Ein Beispiel für eine solche spezielle Hardware ist ein Hardwaresicherheitsmodul (Englisch: HSM, Hardware Security Module). Daher ist in einer Ausführungsform der Erfindung die Datenschutzeinrichtung auf einem Hardwaresicherheitsmodul implementiert, wobei der Datenschutzauftrag in einer Sprache des Hardwaresicherheitsmoduls codiert ist. Ein weiteres Beispiel für eine solche spezielle Hardware ist eine programmierbare logische Schaltung (Field Programmable Gate Array; FPGA), wobei dann die Datenschutzeinrichtung auf dem FPGA implementiert ist und der Datenschutzauftrag in einer Sprache des FPGA codiert ist.

Die vorliegende Erfindung ist grundsätzlich für jede in einer Datenschutzeinrichtung implementierte Datenschutzoperation geeignet, die auf einen Datenstring wirkt und eine für den Datenschutz erforderliche Funktionalität bereitstellt.

In einer Ausführungsform der Erfindung ist die Datenschutzeinrichtung eine Einrichtung zum Verifizieren eines Datenschutzelements, wobei der Datenstring eine verschlüsselte oder unverschlüsselte Darstellung des Datenschutzelements ist, wobei die Datenschutzoperation eine Datenschutzelement-Verifikation ist und wobei der Antwortstring eine Information über die Gültigkeit des Datenschutzelements enthält. Dabei kann das Datenschutzelement als solches unverschlüsselt oder aber auch verschlüsselt vorliegen. In einer Ausführungsform der Erfindung ist das Datenschutzelement ein verschlüsselter Block, welcher eine PIN enthält, und die Datenschutzoperation umfasst eine PIN-Verifikation, wobei zunächst vor der eigentlichen Verifikation der Block mit der PIN zu entschlüsseln ist. In einer weiteren Ausführungsform kann die Datenschutzoperation eine Passwortüberprüfung sein, wobei das Datenschutzelement dann ein Passwort ist. Während der Datenschutzoperation wird das Passwort gehasht, mit einem gespeicherten Hash verglichen und der Antwortstring enthält eine Information darüber, ob das Passwort gültig ist oder nicht.

In einer alternativen Ausführungsform ist die Datenschutzeinrichtung eine Signatureinrichtung, wobei der Datenstring ein zu signierendes Element ist, wobei die Datenschutzoperation eine Signaturoperation ist und wobei der Antwortstring das signierte Element enthält.

In einer weiteren Ausführungsform ist die Datenschutzeinrichtung eine Einrichtung zum Verifizieren einer Signatur, wobei der Datenstring eine Signatur enthält, wobei die Datenschutzoperation eine Signaturverifikation ist und wobei der Antwortstring eine Information über die Gültigkeit der Signatur enthält.

In einer weiteren Ausführungsform der Erfindung ist die Datenschutzeinrichtung eine Hashing-Einrichtung, wobei der Datenstring ein Element ist, für welches ein Hashwert zu erzeugen ist, wobei die Datenschutzoperation einen aus dem Datenstring erzeugten Hashwert ist und wobei der Antwortstring den Hashwert erhält.

In einer weiteren alternativen Ausführungsform ist die Datenschutzeinrichtung eine Ersetzungseinrichtung zum Ersetzen eines Datenstrings durch einen Platzhalter, wobei die Datenschutzoperation ein Ersetzungsauftrag ist, wobei in der Ersetzungseinrichtung ein den Datenstring ersetzender Platzhalter erzeugt wird und wobei der Antwortstring der Platzhalter ist.

Unter einer Ersetzungseinrichtung im Sinne der vorliegenden Anmeldung wird eine Einrichtung, insbesondere aber ein Programm oder ein Programmabschnitt verstanden, welche das Erzeugen des Platzhalters aus dem Datenstring sowie das Wiederherstellen des Datenstrings ausführen.

In einer Ausführungsform der Erfindung erfolgt das Ersetzen des Datenstrings durch den Platzhalter irreversibel. Eine Wiederherstellung des ursprünglichen Datenstrings aus dem Platzhalter ist in einer solchen Ausführungsform nicht möglich, aber für einige Anwendungsszenarien auch gar nicht erforderlich.

In einer alternativen Ausführungsform hingegen ist das Verfahren zum Ersetzen des Datenstrings reversibel und zum Wiederherstellen des Datenstrings aus dem Platzhalter in der Ersetzungseinrichtung weist das Verfahren die Schritte auf, Generieren einer Datenbankabfrage in der Anwendung, wobei die Datenbankabfrage den Platzhalter enthält und wobei die Datenbankabfrage in der Datenbanksprache codiert ist, Übermitteln der Datenbankabfrage von der Anwendung an den Emulator, Umsetzen der Datenbankabfrage in einen Wiederherstellungsauftrag in dem Emulator, wobei der Wiederherstellungsauftrag den Platzhalter enthält und wobei der Wiederherstellungsauftrag in der anderen Sprache codiert ist, Übermitteln des Wiederherstellungsauftrags an die Ersetzungseinrichtung, Wiederherstellen des Datenstrings aus dem Platzhalter in der Ersetzungseinrichtung, Übermitteln des Datenstrings von der Ersetzungseinrichtung an den Emulator und Ausgeben des Datenstrings von dem Emulator an die Anwendung in Form eines Ergebnisses der Datenbankabfrage.

In einer weiteren Ausführungsform der Erfindung ist der zu ersetzende Datenstring zumindest ein Teil einer Kontonummer oder einer Kartennummer. Dabei dient das Ersetzen einer Karten- oder Kontonummer als Datenstring durch einen pseudonymisierten Platzhalter hier nur der Ausführung eines Beispiels. Grundsätzlich sind Ersetzungsverfahren aber für alle Anwendungen geeignet, in denen bestimmte Daten, insbesondere Personendaten oder personenbezogene Daten, anonymisiert werden müssen.

In der weiteren Ausführungsform der Erfindung wird die Anwendung auf einem Server für ein bargeldloses Zahlungsverkehrssystem ausgeführt.

In einer Ausführungsform der Erfindung wird zum Erzeugen des dem zu ersetzenden Datenstring zugeordneten und diesen ersetzenden Platzhalters aus dem Datenstring ein Platzhalter erzeugt, welcher eine verschlüsselte Repräsentation des ursprünglichen Datenstrings ist.

Das erfindungsgemäße Erzeugen eines dem Datenstring zugeordneten und diesen ersetzenden Platzhalters beruht in einer alternativen Ausführungsform auf einer Tokenisierung des Datenstrings, wobei der Datenstring durch einen Token als Platzhalter ersetzt wird.

Unabdingbare Anforderungen an eine reversible Tokenisierung sind dabei die Umkehrbarkeit des Verfahrens, d.h. jeder Token muss sich unzweideutig wieder auf den ursprünglichen Datenstring abbilden lassen, und die Formaterhaltung der Tokenisierung, um den Datensatz, in welchem ein Datenstring durch ein Token ersetzt wurde, weiterverarbeiten, insbesondere speichern, zu können.

In einer Ausführungsform der Erfindung wird eine Mehrzahl von Token als Platzhalter vorab zufällig erzeugt und eine Zuordnung zwischen jedem ersetzten Datenstring und dem jeweiligen ersetzenden Token in einer Tabelle abgelegt.

Da die Tabelle mit der Zuordnung zwischen den ersetzten Datenstrings und den ersetzenden Token von den Knoten sicher gespeichert werden, besteht für einen Dritten keine Möglichkeit, aus den in der Verarbeitung befindlichen Datensätzen, welche mithilfe der Token pseudonymisiert sind, auf die zugehörigen Datenstrings zurück zu schließen.

Alternativ kann die Tokenisierung das Ersetzen auch durch eine bijektive mathematische Funktion erfolgen, welche auf den zu verschlüsselnden ersetzenden Datenstring angewandt wird und die eine eindeutige Abbildung des unverschlüsselten Datenstrings auf den Token und des Token auf den ursprünglichen Datenstring bereitstellt.

Aus dem europäischen Patent EP 2 735 991 B1 ist zudem ein weiteres Tokenisierungsverfahren zum Erzeugen von Platzhaltern bekannt. In diesem Verfahren wird der den ursprünglichen Datenstring ersetzende Token zum einen durch in einer Nachschlagetabelle bzw. Ersetzungstabelle gespeicherte zufällige Zeichen generiert, zum anderen jedoch durch eine Funktion, welche auf den zu ersetzenden Datenstring selbst angewandt wird und im Ergebnis dann auf die ersetzenden Zeichen verweist.

Dabei dient eine auf den ursprünglichen Datenstring angewandte mathematische Funktion dem Berechnen eines Index, der denjenigen Eintrag der Ersetzungstabelle bestimmt, welche als nächstes zum Ersetzen eines Teils des unverschlüsselten Datenstrings verwendet werden soll.

In dieser Ausführungsform erfolgt das Erzeugen des Token aus dem unverschlüsselten Datenstring zum Teil dadurch, dass ein Index auf die Ersetzungstabelle mathematisch aus dem unverschlüsselten Datenstring selbst generiert wird, die einzelnen Zeichen des unverschlüsselten Datenstrings werden jedoch durch zufällige Ersetzungswerte, die aus der Ersetzungstabelle abgeleitet werden, ersetzt.

Dieses Erzeugen des Token basiert auf einem unbalancierten Feistelnetzwerk, bei welchem der Datenstring zur Erzeugung des Token zunächst in zwei Teilstrings zerlegt wird. Dabei besteht der erste Teilstring aus einem einzigen Zeichen des unverschlüsselten Strings und der zweite Teilstring aus den restlichen Zeichen des unverschlüsselten Datenstrings. Dabei wird der Begriff "Zeichen" vom Fachmann breit verstanden. Insbesondere kann das einzige Zeichen des ersten Teilstrings mehrere Elemente des unterliegenden Zeichensatzes bzw. Alphabets umfassen, wobei diese mehreren Elemente für das Ersetzen wie ein einziges Zeichen verarbeitet werden.

Es ist sogar eine Ausführungsform der Erfindung bevorzugt, bei welcher die Anzahl der Elemente des unverschlüsselten Datenstrings, welche das einzige Zeichen des ersten Teilstrings bilden, größer als eins ist.

Dieses Tokenisierungsverfahren macht es insbesondere überflüssig, den ersetzten unverschlüsselten Datenstring in die Ersetzungstabelle zu schreiben, da die Wiederherstellung ausschließlich mithilfe des Token, der Berechnung des Index der Ersetzungstabelle sowie des entsprechenden Eintrags der Ersetzungstabelle erfolgen kann. Auf diese Weise kann die Ersetzungstabelle vollständig vorab generiert und beispielsweise auf Backup-Systeme verteilt werden. Eine Synchronisierung zwischen in verschiedenen Systemen gehaltenen identischen Ersetzungstabellen zu einem späteren Zeitpunkt ist nicht erforderlich. Kollisionen werden inhärent vermieden.

Die Wiederherstellung eines unverschlüsselten ursprünglichen Datenstrings aus dem Token setzt jedoch voraus, dass der Token in irgendeiner Weise einem Datenstring zugeordnet werden kann.

In einer Ausführungsform wird beim Erzeugen des Token das Ersetzungszeichen aus dem durch den Index bestimmten Eintrag der Ersetzungstabelle und dem zu ersetzenden Zeichen berechnet und beim Wiederherstellen des unverschlüsselten Datenstrings wird das Ersetzungszeichen aus dem durch den Index bestimmten Eintrag und dem zu ersetzenden Zeichen berechnet.

Bei einer derartigen Ausgestaltung des Verfahrens ist es zweckmäßig, wenn die Rechenoperationen zum Berechnen des Ersetzungszeichens beim Erzeugen des Token und beim Wiederherstellen unverschlüsselten Datenstrings zueinander inverse mathematische Operationen, insbesondere Addition und Subtraktion oder Multiplikation und Division, sind.

In einer Ausführungsform der Erfindung ist die Größe des für den zu ersetzenden Datenstring verwendeten Alphabets gleich der Größe des Alphabets, aus welchem die Ersetzungszeichen bestehen.

Um eine ausreichende Sicherheit zu gewährleisten, ist es vorteilhaft, wenn die Anzahl der Wiederholungen der Verfahrensschritte beim Erzeugen des Token und beim Wiederherstellen des unverschlüsselten Datenstrings mindestens n +1, vorzugsweise jedoch 2n, beträgt, wobei n die Länge des zu ersetzenden Datenstrings geteilt durch die Anzahl der pro Ersetzungsvorgang ersetzten Elemente des Datenstrings ist.

In einer Ausführungsform der Erfindung umfasst das Berechnen des Index der Ersetzungstabelle bei dem Erzeugen des Token oder dem Wiederherstellen des unverschlüsselten Datenstrings aus einem Token folgende Schritte, Berechnen eines Hash-Werts durch Anwenden einer Hash-Funktion auf eine Binäreingabe, die den ersten Teilstring des Datenstrings umfasst und Bestimmen der x signifikantesten Bits des Hash-Werts als Index des zu verwendenden Ersetzungswerts, wobei x die Anzahl von Bits ist, die benötigt werden, um alle Einträge der Ersetzungstabelle mit einem eindeutigen Index zu versehen. Bei einer Trunkierung auf x Bits kann die Ersetzungstabelle 2^{X} Einträge aufweisen, die alle mit einem eindeutigen, durch die x Bits darstellbaren Index versehen sind.

In einer Ausführungsform der Erfindung umfasst die Binäreingabe, auf welche der Hash-Wert angewandt wird, zusätzlich einen Binärstring (salt) der Länge s und/oder die Ordnung der Wiederholung. Dabei wird unter der Ordnung der Wiederholung die Anzahl der Wiederholungen der Verfahrensschritte zum Ersetzen der einzelnen Zeichen des Datenstrings einschließlich der aktuellen Wiederholungsrunde verstanden.

In einer Ausführungsform der Erfindung umfasst der Binärstring (salt) einen nicht zu verschlüsselnden Teilstring des zu verschlüsselnden Datenstrings und/oder einen willkürlich gewählten String. Insbesondere kann der Binärstring (salt) aus einer Kombination von Strings zusammengesetzt sein, um die Sicherheit des Systems zu erhöhen.

Mit Hilfe eines solchen hier als salt bezeichneten Binärstrings, welcher für das Berechnen des Index für die zu verwendenden Ersetzungswerte herangezogen werden kann, kann die Sicherheit des verwendeten Verfahrens erhöht werden. Wird als Binärstring ein willkürlich gewählter String verwendet, so kann dessen Wert entweder willkürlich von dem Administrator der Tokenisierungseinrichtung festgelegt werden oder beispielsweise auch ein festgelegter Bestandteil des Codes für die Tokenisierungseinrichtung sein. In einer Ausführungsform der Erfindung ist der Binärstring für das Berechnen des Index ein nicht zu verschlüsselnder Teilstring eines unverschlüsselten Datenstrings, beispielsweise einer PAN.

In einer Ausführungsform ist ferner umfasst die Anwendung zudem eine Abfangeinrichtung auf einem Datenkanal, welche für einen in einer ersten Richtung übertragenen Datensatz die Schritte ausführt
a. Abfangen des über den Datenkanal in der ersten Richtung übertragenen Datensatzes,
b. Identifizieren des zu ersetzenden Datenstrings in dem abgefangenen Datensatz,
c. Weiterleiten des zu ersetzenden Datenstrings an mindestens einen der Knoten der Ersetzungseinrichtung zum Bestimmen eines den Datenstring ersetzenden Platzhalters ,
d. Empfangen des den Datenstring ersetzenden Platzhalters von dem mindestens einen Knoten,
e. Austauschen des Datenstrings in dem Datensatz durch den Platzhalter,
f. Weiterleiten des Datensatzes mit dem Platzhalter in der ersten Richtung über den Datenkanal, und
g. wobei die Abfangeinrichtung für einen in einer zweiten Richtung übertragenen Datensatz die Schritte ausführt Abfangen des über den Datenkanal in der zweiten Richtung übertragenen Datensatzes,
h. Identifizieren eines Platzhalters in dem abgefangenen Datensatz,
i. Weiterleiten des Platzhalters an mindestens einen der Knoten der Ersetzungseinrichtung zum Wiederherstellen des durch den Platzhaltern ersetzten Datenstrings,
j. Empfangen des durch den Platzhaltern ersetzten Datenstrings von dem mindestens einen Knoten der Ersetzungseinrichtung,
k. Austauschen des Platzhalters in dem Datensatz durch den Datenstring und
l. Weiterleiten des Datensatzes mit dem Datenstring über den Datenkanal.

Die Idee einer solchen Abfangeinrichtung ist es, den Eingabe-/Ausgabekanal einer weiteren Anwendung zur Verarbeitung des Datensatzes, d.h. einer Anwendung, zu überwachen und ohne Eingriff in die anderen Einrichtungen des Systems in allen Datensätzen, welche unverschlüsselte sicherheitsrelevante Datenstrings enthalten, diese durch Platzhalter zu ersetzen. Die so von der Abfangeinrichtung modifizierten Datensätze, aus denen der Datenstring nicht mehr ableitbar ist, werden dann von einer weiteren Anwendung weiterverarbeitet, wobei diese Ersetzung des unverschlüsselten Datenstrings durch den Platzhalter zu keinerlei Änderung bei der Verarbeitung führt, da der Platzhalter den Datenstring vorzugsweise formaterhaltend ersetzt.

Insoweit die oben beschriebenen Ausführungsformen des erfindungsgemäßen Verfahrens zumindest teilweise realisiert werden können, wobei eine softwaregesteuerte Datenverarbeitungseinrichtung verwendet wird, so ist es offensichtlich, dass ein Computerprogramm, das eine solche Softwaresteuerung bereitstellt und ein Speichermedium, auf welchem solch ein Computerprogramm gespeichert ist, als Aspekte der Erfindung in Betracht zu ziehen sind.

Weitere Vorteile, Merkmale und Anwendungsmöglichkeiten der vorliegenden Erfindung werden anhand der folgenden Beschreibung einer Ausführungsform und der dazugehörigen Figuren deutlich.

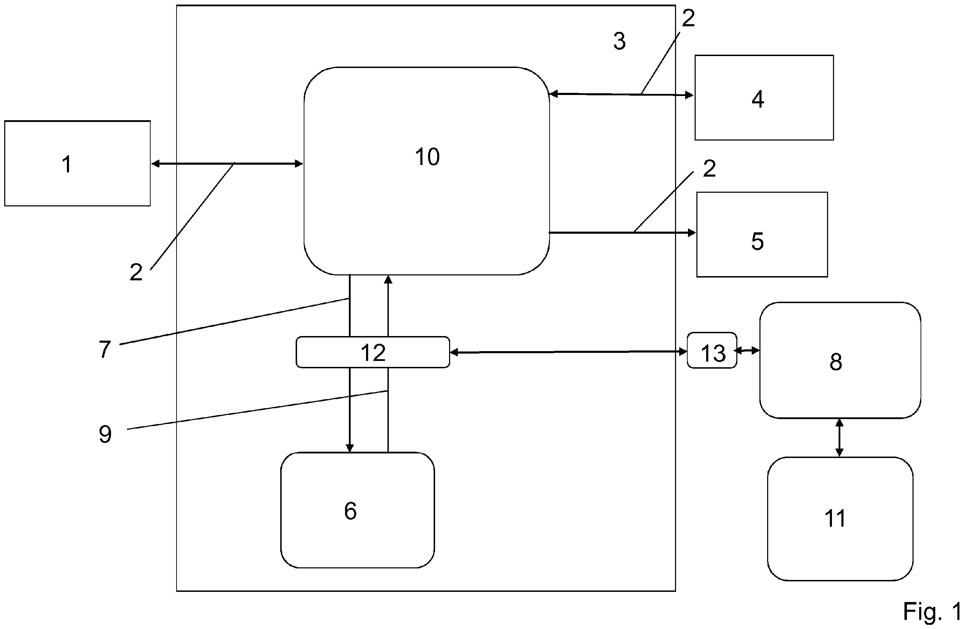

- Figur 1: ist ein Blockdiagramm einer Implementierung einer Ausführungsform des erfindungsgemäßen Verfahrens.

Figur 1 zeigt eine schematische Darstellung eines Zahlungsverkehrsabwicklungssystems, in welchem das erfindungsgemäße Verfahren zum Übergeben eines Datenstrings von einer Anwendung 3 an eine Datenschutzeinrichtung 8 zum Einsatz kommt.

Das gezeigte Zahlungsverkehrsabwicklungssystem besteht aus einer Mehrzahl von Kassensystemen 1, von denen eines in Figur 1 dargestellt ist. Über eine Netzwerkverbindung 2 ist das Kassensystem 1 mit einer Anwendung 3 auf einem zentralen Server verbunden. Die Anwendung 3 wiederum ist über Netzwerkverbindungen 2 sowohl mit Kreditkartenanbietern 4 als auch mit dem oder den eigentlichen Zahlungsausgleichssystemen 5 verbunden.

Der Anwendung wiederum weist in der gezeigten Ausführungsform eine zentrale Verarbeitungseinheit 10, eine Abfangeinrichtung 12 und einen Transaktionsdatenspeicher 6 auf.

Von den Kassensystemen 1 empfängt der Server 3 über die Netzwerkverbindung 2 Informationen über die zu tätigende Transaktion. Diese Informationen umfassen insbesondere die (Kredit-) Kartennummer des Käufers sowie Angaben zum Preis, dem Abwicklungszeitpunkt des Kaufs und Ähnlichem. Dabei liegen die Informationen über eine Transaktion in Form einer Nachricht vor, welche über die Netzwerkverbindungen 2 von und zu der Anwendung 3 übertragen wird. Eine solche Nachricht ist ein Datensatz im Sinne der vorliegenden Anmeldung. Die Informationen über die getätigte Transaktion können zum einen von der zentralen Verarbeitungseinheit 10 der Anwendung 3 unmittelbar, d.h. ohne Zwischenspeicherung, an den Kreditkartengeber 4 oder das Zahlungsausgleichssystem 5 weitergeleitet werden. Dabei erfolgt die Weiterleitung aus Sicht der Anwendung 3 implementierten Systems im Klartext, d.h. unverschlüsselt. Dies bedeutet jedoch nur, dass für diese Übermittlung die Anwendung 3 selbst keine Verschlüsselung vornimmt. Vielmehr werden die Kanäle 2 von und zu der Anwendung 3 durch für diese proprietäre Systeme geschützt. Beispielsweise sind die Netzwerke 2 als VPN-Kanäle ausgestaltet.

Aufgabe der in der Anwendung 3 implementierten zentralen Verarbeitungseinheit 10 ist es, aufgrund ihrer hohen Verfügbarkeit die Transaktionsinformationen zu verarbeiten und gegebenenfalls solange zu speichern, bis auch die korrespondierenden Einrichtungen der Kreditkartengeber 4 und der Systeme 5 wieder verfügbar sind. Zudem erfolgt üblicherweise eine Speicherung der Transaktionsinformationen zur späteren Abwicklung von Reklamationen sowie zur kumulierten Weiterleitung an die Zahlungsausgleichssysteme 5.

Um eine größtmögliche Sicherheit der Transaktionsdaten bei der Handhabung in der Anwendung 3 zu gewährleisten, werden sämtliche in den Transaktionsdaten enthaltene PANs, welche hier die unverschlüsselten Datenstrings im Sinne der vorliegenden Anmeldung bilden, vor der Speicherung der Daten in dem Transaktionsdatenspeicher 6 durch Token ersetzt. Für diese Ersetzung wird der Eingangspfad 7 in den Transaktionsdatenspeicher 6 ebenso wie der Ausgangsdatenpfad 9 aus dem Transaktionsdatenspeicher 6 von der Abfangeinrichtung 12 als Teil der Anwendung 3 überwacht.

Alle zu speichernden Datensätze auf dem Eingangsdatenpfad 7, welche eine PAN, d.h. einen sicherheitsrelevanten unverschlüsselten Datenstring, enthalten, werden von der Abfangeinrichtung 12 abgefangen. Der Datensatz wird analysiert und der darin enthaltene unverschlüsselte Datenstring wird an eine Tokenisierungseinrichtung 8 (auch als Tokenisierungs-Engine bezeichnet) übergeben.

Die Tokenisierungseinrichtung 8 bildet eine Datenschutzeinrichtung im Sinne der vorliegenden Anmeldung. Um eine größtmögliche Sicherheit der Datenschutzoperation auf der Tokenisierungseinrichtung 8 zu gewährleisten ist die Tokenisierungseinrichtung 8 außerhalb der Anwendung 3 implementiert, sodass ein Datenaustausch zwischen der Anwendung 3 und der Tokenisierungseinrichtung 8 über eine Netzwerkverbindung 2 erfolgt. Zusätzlich ist die Tokenisierungseinrichtung 8 nicht auf einem herkömmlichen Server implementiert, sondern auf einer speziellen Hardware, nämlich in einem Hardware-Sicherheitsmodul, welches eine größtmögliche Sicherheit vor Software und Hardware-Angriffen gewährleistet.

Für die Tokenisierungseinrichtung 8 auf dem Hardware-Sicherheitsmodul wird eine Programmierschnittstelle (API) bereitgestellt, die es auf einfache Weise ermöglicht PANs von der Anwendung 3 an die Tokenisierungseinrichtung 8 und Token von der Tokenisierungseinrichtung 8 an die Anwendung 3 zu übertragen. Es versteht sich, dass diese Programmierschnittstelle spezifisch für die Sprache, in welcher die Anwendung 3 implementiert ist, ist. Daraus folgt, dass typischerweise der Hersteller der Tokenisierungseinrichtung 8 für jede Programmiersprache, in der Anwendungen implementiert sind, in welche die Tokenisierung integriert werden soll, eine Programmierschnittstelle verfügbar halten muss.

Die in Figur 1 dargestellte Variante jedoch greift für die jeweilige Programmierschnittstelle für die Anwendung 3 auf die in vielen Sprachen verfügbare Programmierschnittstelle der Schlüssel-Werte-Datenbank Redis zurück. Die Übergabe einer von der Abfangeinrichtung 12 abgefangenen PAN erfolgt dann mit einem in der Datenbanksprache für Redis programmierten Datenbankabfrage. Es ist offensichtlich, dass die Tokenisierungseinrichtung 8 eine solche Datenbankabfrage nicht ohne weiteres versteht, d.h. die PAN extrahieren und die Datenschutzoperation ausführen kann. Daher ist in dem Datennetzwerk 2 zwischen der Anwendung 3 und der Tokenisierungseinrichtung 8 ein als Proxy implementierter Emulator 13 vorgesehen. Dieser extrahiert aus der in der Datenbanksprache für Redis programmierten Datenbank die PAN und inkludiert die PAN in einem in der Sprache der Tokenisierungseinrichtung 8 codierten Datenschutzauftrag, welcher sodann von dem Emulator 13 an die Tokenisierungseinrichtung 8 übergeben wird.

Tokenisierungseinrichtung 8 wendet dann eine Tokenisierung als Datenschutzoperation entsprechend dem Datenschutzauftrag auf den Datenstring an. Die Tokenisierungseinrichtung 8 empfängt den unverschlüsselten Datenstring und ersetzt diesen durch einen Token. Der Token wird dann wieder in der Sprache der Tokenisierungseinrichtung 8 an den Emulator übergeben und dort in ein in der Datenbanksprache für Redis codiertes Ergebnis einer Datenbankabfrage umgesetzt und als solche an die Abfangeinrichtung 12 der Anwendung 3 übergeben. Die Abfangeinrichtung 12 ersetzt danach in dem abgefangenen Datensatz den unverschlüsselten Datenstring durch den Token und gibt den so veränderten sicheren Datensatz an den Transaktionsdatenspeicher 6 zum Speichern des Datensatzes aus.

Soll umgekehrt ein Datensatz aus dem Transaktionsdatenspeicher 6 ausgelesen und an die zentrale Verarbeitungseinheit 10 bereitgestellt werden, so muss zunächst der Token des in dem Transaktionsdatenspeicher gespeicherten Datensatzes wieder durch den unverschlüsselten Datenstring ersetzt werden.

Dazu werden alle aus dem Transaktionsdatenspeicher ausgelesenen Datensätze auf dem Ausgangsdatenpfad 9 von der Abfangeinrichtung 12 abgefangen. Der Datensatz wird analysiert und der darin enthaltene Token wird wie zuvor für die PAN beschrieben über den Emulator 13 an die Tokenisierungseinrichtung 8 übergeben. Von der Tokenisierungseinrichtung 8 wird der Token empfangen und wieder durch den zugehörigen unverschlüsselten Datenstring ersetzt. Der unverschlüsselte Datenstring wird dann wieder über den Emulator 13 an die Abfangeinrichtung 12 übergeben. Die Abfangeinrichtung 12 ersetzt danach in dem aus dem Transaktionsdatenspeicher 6 ausgelesenen und abgefangenen Datensatz den Token durch den unverschlüsselten Datenstring und gibt den so veränderten Datensatz an die zentrale Verarbeitungseinheit 10 der Anwendung 3 zur Weiterverarbeitung des Datensatzes aus. Eine solche Weiterverarbeitung umfasst insbesondere ein Routen einer Nachricht mit dem Datensatz an einen Kartenanbieter 4 oder ein Zahlungsausgleichsystem 5.

Als vorteilhaft bei dieser Architektur erweist es sich, dass in dem Transaktionsdatenspeicher 6 die PANs zu den einzelnen Transaktionen nicht im Klartext vorliegen, sondern durch Token, d.h. zufällig ermittelte Synonyme, ersetzt sind. Ein Angriff auf den Transaktionsdatenspeicher 6 liefert also niemals die Informationen über die PANs, sodass ein solcher Angriff wirkungslos bleibt. Um eine größtmögliche Sicherheit zu gewährleisten, sind die eigentliche Tokenisierungseinrichtung 8 und die erfindungsgemäße Kombination aus Indexfunktion und Ersetzungstabelle, die in dem sogenannten Token-Tresor 11 verwahrt werden, getrennt voneinander implementiert.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Kassensystem
- 2: Netzwerkverbindung
- 3: Anwendung
- 4: Kreditkartenanbieter
- 5: Zahlungsausgleichssysteme
- 6: Transaktionsdatenspeicher
- 7: Eingangspfad
- 8: Tokenisierungseinrichtung
- 9: Datenausgangspfad
- 10: zentrale Verarbeitungseinheit des Servers
- 11: Token-Tresor
- 12: Abfangeinrichtung
- 13: Emulator

## Patentansprüche

1. Computerimplementiertes Verfahren zum Übergeben eines Datenstrings von einer Anwendung (3) an eine Datenschutzeinrichtung (8) mit den Schritten
Generieren einer Datenbankabfrage in der Anwendung (3),
wobei die Datenbankabfrage den Datenstring enthält und
wobei die Datenbankabfrage in einer Datenbanksprache codiert ist, Übermitteln der Datenbankabfrage von der Anwendung (3) an einen Emulator (13), Umsetzen der Datenbankabfrage in einen Datenschutzauftrag in dem Emulator (13),
wobei der Datenschutzauftrag den Datenstring enthält und
wobei der Datenschutzauftrag in einer anderen Sprache als der Datenbanksprache codiert ist,
wobei die andere Sprache eine von der Datenschutzeinrichtung (8) interpretierbare Sprache ist,
Übermitteln des Datenschutzauftrags von dem Emulator (13) an die Datenschutzeinrichtung (8),
Anwenden einer Datenschutzoperation auf den Datenstring und Ausgeben eines Antwortstrings in der Datenschutzeinrichtung (8),
Übermitteln des Antwortstrings von der Datenschutzeinrichtung (8) an den Emulator (13) und
Ausgeben des Antwortstrings von dem Emulator (13) an die Anwendung (3) in Form eines in der Datenbanksprache codierten Ergebnisses der Datenbankabfrage.

2. Computerimplementiertes Verfahren nach dem vorhergehenden Anspruch, **dadurch gekennzeichnet, dass** die Datenbanksprache eine NoSQL-Sprache, vorzugsweise eine Sprache für eine Schlüssel-Werte-Datenbank und besonders bevorzugt eine Sprache für Redis, ist.

3. Computerimplementiertes Verfahren nach Anspruch 1, **dadurch gekennzeichnet, dass** die Datenbanksprache SQL ist.

4. Computerimplementiertes Verfahren nach einem der vorhergehenden Ansprüche, **dadurch gekennzeichnet, dass** das Verfahren zusätzlich entweder die Schritte umfasst
Generieren eines Datenbankkonfigurationsbefehls in der Anwendung (3),
wobei der Datenbankkonfigurationsbefehl einen Konfigurationsparameter für die Datenschutzoperation enthält und
wobei der Datenbankkonfigurationsbefehl in der Datenbanksprache codiert ist,
Übermitteln des Datenbankkonfigurationsbefehls von der Anwendung (3) an den Emulator (13),
Umsetzen des Datenbankkonfigurationsbefehls in einen Datenschutzkonfigurationsbefehl mit dem Konfigurationsparameter in dem Emulator (13),
wobei der Datenschutzkonfigurationsbefehl in der anderen Sprache als der Datenbanksprache codiert ist,
und/oder
Einfügen eines Konfigurationsparameters für die Datenschutzoperation in die Datenbankabfrage ,
Umsetzen der Datenbankanfrage in dem Emulator (13) so dass ein Datenschutzkonfigurationsbefehl mit dem Konfigurationsparameter gebildet wird,
wobei der Datenschutzkonfigurationsbefehl in der anderen Sprache als der Datenbanksprache codiert ist,
und
Übermitteln des Datenschutzkonfigurationsbefehls von dem Emulator (13) an die Datenschutzeinrichtung (8) und
Anwenden der Datenschutzoperation auf den Datenstring mit einer durch den Konfigurationsparameter vorgegebenen Konfiguration.

5. Computerimplementiertes Verfahren nach einem der vorhergehenden Ansprüche, **dadurch gekennzeichnet, dass** der Emulator (13) als Proxy ausgeführt wird.

6. Computerimplementiertes Verfahren nach einem der vorhergehenden Ansprüche, **dadurch gekennzeichnet, dass** die Datenschutzeinrichtung (8) auf einem Hardware-Sicherheitsmodul implementiert ist, wobei der Datenschutzauftrag in einer Sprache des Hardware-Sicherheitsmoduls codiert ist, oder dass die Datenschutzeinrichtung (8) auf einer programmierbaren logischen Schaltung implementiert ist, wobei der Datenschutzauftrag in einer Sprache der programmierbaren logischen Schaltung codiert ist.

7. Computerimplementiertes Verfahren nach einem der vorhergehenden Ansprüche, **dadurch gekennzeichnet, dass**
die Datenschutzeinrichtung (8) eine Einrichtung zum Verifizieren eines Datenschutzelements ist,
wobei der Datenstring eine verschlüsselte oder eine unverschlüsselte Darstellung des Datenschutzelements ist,
wobei die Datenschutzoperation eine Datenschutzelement-Verifikation ist und
wobei der Antwortstring eine Information über die Gültigkeit des Datenschutzelements enthält,
oder die Datenschutzeinrichtung (8) Signatureinrichtung ist,
wobei der Datenstring ein zu signierendes Element ist,
wobei die Datenschutzoperation eine Signatur-Operation ist und
wobei der Antwortstring das signierte Element enthält,
oder die Datenschutzeinrichtung (8) eine Einrichtung zum Verifizieren einer Signatur ist,
wobei der Datenstring eine Signatur enthält,
wobei die Datenschutzoperation eine Signatur-Verifikation ist und
wobei der Antwortstring eine Information über Gültigkeit der Signatur enthält,
oder die Datenschutzeinrichtung (8) eine Hashing-Einrichtung ist,
wobei der Datenstring ein Element ist, für welches ein Hashwert zu erzeugen ist,
wobei die Datenschutzoperation eine Hashwert aus dem Datenstring erzeugt und
wobei der Antwortstring den Hashwert enthält.

8. Computerimplementiertes Verfahren nach einem der Ansprüche 1 bis 7, **dadurch gekennzeichnet, dass**
die Datenschutzeinrichtung (8) eine Ersetzungseinrichtung zum Ersetzen eines Datenstrings durch einen Platzhalter ist,
die Datenschutzoperation ein Ersetzungsauftrag ist, wobei in der Ersetzungseinrichtung ein den Datenstring ersetzender Platzhalter erzeugt wird,
und
der Antwortstring der Platzhalter ist.

9. Computerimplementiertes Verfahren nach dem vorhergehenden Anspruch, **dadurch gekennzeichnet, dass** es zum Wiederherstellen des Datenstrings aus dem Platzhalter weiterhin die Schritte aufweist
Generieren einer Datenbankabfrage in der Anwendung (3),
wobei die Datenbankabfrage den Platzhalter enthält und
wobei die Datenbankabfrage in der Datenbanksprache codiert ist,
Übermitteln der Datenbankabfrage von der Anwendung (3) an den Emulator (13),
Umsetzen der Datenbankabfrage in einen Wiederherstellungsauftrag in dem Emulator (13),
wobei der Wiederherstellungsauftrag den Platzhalter enthält und
wobei der Wiederherstellungsauftrag in der anderen Sprache codiert ist,
Übermitteln des Wiederherstellungsauftrags an die Ersetzungseinrichtung,
Wiederherstellen des Datenstrings aus dem Platzhalter in der Ersetzungseinrichtung,
Übermitteln des Datenstrings von der Ersetzungseinrichtung an den Emulator (13) und
Ausgeben des Datenstrings von dem Emulator (13) an die Anwendung (3) in Form eines Ergebnisses der Datenbankabfrage.

10. Computerimplementiertes Verfahren nach Anspruch 8 oder 9, **dadurch gekennzeichnet, dass** der Platzhalter eine verschlüsselte Repräsentation des ursprünglichen Datenstrings ist.

11. Computerimplementiertes Verfahren nach einem der Ansprüche 8 bis 10, **dadurch gekennzeichnet, dass** das Erzeugen des Platzhalters auf einer Tokenisierung des Datenstrings, wobei der Datenstring durch einen Token als Platzhalter ersetzt wird, beruht.

12. Computerimplementiertes Verfahren nach dem vorhergehenden Anspruch, **dadurch gekennzeichnet, dass** eine Mehrzahl von Token als Platzhalter vorab zufällig erzeugt werden und eine Zuordnung zwischen dem ersetzten Datenstring und dem ersetzenden Token in einer Tabelle abgelegt wird.

13. Computerimplementiertes Verfahren nach Anspruch 11, **dadurch gekennzeichnet, dass** die Tokenisierung durch eine bijektive mathematische Funktion erfolgt, die auf den zu ersetzenden Datenstring angewandt wird und die eine eindeutige Abbildung des Datenstrings auf den Token und des Token auf den unverschlüsselten Datenstring bereitstellt.

14. Computerimplementiertes Verfahren nach Anspruch 11, **dadurch gekennzeichnet, dass** als Platzhalter ein Token erzeugt wird, wobei das Erzeugen des den Datenstring ersetzenden Token die Schritte umfasst
Bereitstellen einer Ersetzungstabelle mit zufälligen Einträgen, wobei jedem Eintrag ein Index der Ersetzungstabelle zugeordnet ist,
Aufteilen des unverschlüsselten Datenstrings in zwei Teilstrings, wobei der erste Teilstring aus einem Zeichen des unverschlüsselten Datenstrings besteht und der zweite Teilstring aus den restlichen Zeichen des unverschlüsselten Datenstrings besteht,
Berechnen eines Index der Ersetzungstabelle aus dem zweiten Teilstring , so dass ein Eintrag der Ersetzungstabelle bestimmt wird,
Erzeugen eines Ersetzungszeichens aus dem von dem Index bestimmten Eintrag, Ersetzen der Zeichen des ersten Teilstrings durch das Ersetzungszeichen, Vertauschen des ersten und des zweiten Teilstrings, so dass das ersetzte Zeichen des ersten Teilstrings das letzte Zeichen oder das erste Zeichen des zweiten Teilstrings wird und das erste Zeichen oder das letzte Zeichen des zweiten Teilstrings das Zeichen des ersten Teilstrings wird, und
Wiederholen der vorstehenden Schritte, sodass ein dem unverschlüsselten Datenstring zugeordneter Token erzeugt wird, und
das Erzeugen des wiederherzustellenden Datenstrings aus dem Token die Schritte umfasst Bereitstellen der Ersetzungstabelle,
Aufteilen des Token in zwei Teilstrings, wobei der erste Teilstring aus allen Zeichen außer dem letzten Zeichen des Token besteht und der zweite Teilstring nur dem letzten Zeichen des Token besteht,
Berechnen eines Index der Ersetzungstabelle aus dem ersten Teilstring , sodass ein bestimmter Eintrag der Ersetzungstabelle bestimmt wird,
Erzeugen eines Ersetzungszeichens aus dem von dem Index bestimmten Eintrag der Ersetzungstabelle, so dass das Zeichen des zweiten Teilstrings durch das Ersetzungszeichen ersetzt wird,
Vertauschen des ersten und des zweiten Teilstrings, so dass das Zeichen des zweiten Teilstrings das erste Zeichen oder das letzte Zeichen des ersten Teilstrings wird und das letzte Zeichen oder das erste Zeichen des ersten Teilstrings das Zeichen des zweiten Teilstrings wird, und
Wiederholen der vorstehenden Schritte, sodass der dem Token zugeordnete unverschlüsselte Datenstring wiederhergestellt wird.

15. Computerprogramm mit Programmcode zur Durchführung eines Verfahrens nach einem der vorhergehenden Ansprüche.

## Claims

1. A computer-implemented method of transferring a data string from an application (3) to a data protection device (8), comprising the steps:
generating a database query in the application (3),
wherein the database query contains the data string, and
wherein the database query is coded in a database language,
communicating the database query from the application (3) to an emulator (13),
converting the database query into a data protection instruction in the emulator (13),
wherein the data protection instruction contains the data string, and
wherein the data protection instruction is coded in a language other than the database language,
communicating the data protection instruction from the emulator (13) to the data protection device (8),
applying a data protection operation to the data string and outputting a response string in the data protection device (8),
communicating the response string from the data protection device (8) to the emulator (13), and
outputting the response string from the emulator (13) to the application (3) in the form of a result of the database query, that is coded in the database language.

2. A computer-implemented method according to the preceding claim **characterised in that** the database language is an NoSQL language, preferably a language for a key-value database and particularly preferably a language for Redis.

3. A computer-implemented method according to claim 1 **characterised in that** the database language is SQL.

4. A computer-implemented method according to one of the preceding claims **characterised in that** the method additionally includes either the steps:
generating a database configuration command in the application (3),
wherein the database configuration command contains a configuration parameter for the data protection operation, and
wherein the database configuration command is coded in the database language,
communicating the database configuration command from the application (3) to the emulator (13),
converting the database configuration command into a data protection configuration command with the configuration parameter in the emulator (13),
wherein the data protection configuration command is coded in the language other than the database language,
and/or
inserting a configuration parameter for the data protection operation into the database query,
converting the database query in the emulator (13) so that a data protection configuration command is formed with the configuration parameter,
wherein the data protection configuration command is coded in the language other than the database language,
and
communicating the data protection configuration command from the emulator (13) to the data protection device (8), and
applying the data protection operation to the data string with a configuration which is predetermined by the configuration parameter.

5. A computer-implemented method according to one of the preceding claims **characterised in that** the emulator (13) is in the form of a proxy.

6. A computer-implemented method according to one of the preceding claims **characterised in that** the data protection device (8) is implemented on a hardware security module, wherein the data protection instruction is coded in a language of the hardware security module, or that the data protection device (8) is implemented on a programmable logic circuit, wherein the data protection instruction is coded in a language of the programmable logic circuit.

7. A computer-implemented method according to one of the preceding claims **characterised in that**
the data protection device (8) is a device for verifying a data protection element,
wherein the data string is an encrypted or unencrypted representation of the data protection element,
wherein the data protection operation is a data protection element verification, and
wherein the response string contains information about the validity of the data protection element,
or the data protection device (8) is a signature device,
wherein the data string is an element to be signed,
wherein the data protection operation is a signature operation, and
wherein the response string contains the signed element,
or the data protection device (8) is a device for verifying a signature,
wherein the data string contains a signature,
wherein the data protection operation is a signature verification, and
wherein the response string contains information about the validity of the signature,
or the data protection device (8) is a hashing device,
wherein the data string is an element for which a hash value is to be generated,
wherein the data protection operation generates a hash value from the data string, and
wherein the response string contains the hash value.

8. A computer-implemented method according to one of claims 1 to 7 **characterised in that**
the data protection device (8) is a replacement device for replacing a data string by a placeholder,
the data protection operation is a replacement instruction, wherein a placeholder replacing the data string is generated in the replacement device, and
the response string is the placeholder.

9. A computer-implemented method according to the preceding claim **characterised in that** for restoring the data string from the placeholder it further has the steps:
generating a database query in the application (3),
wherein the database query contains the placeholder, and
wherein the database query is coded in the database language,
communicating the database query from the application (3) to the emulator (13),
converting the database query into a restoration instruction in the emulator (13),
wherein the restoration instruction contains the placeholder, and
wherein the restoration instruction is coded in the other language,
communicating the restoration instruction to the replacement device,
restoring the data string from the placeholder in the replacement device,
communicating the data string from the replacement device to the emulator (13), and
outputting the data string from the emulator (13) to the application (3) in the form of a result of the database query.

10. A computer-implemented method according to claim 8 or claim 9 **characterised in that** the placeholder is an encrypted representation of the original data string.

11. A computer-implemented method according to one of claims 8 to 10 **characterised in that** generation of the placeholder is based on tokenisation of the data string, wherein the data string is replaced by a token as the placeholder.

12. A computer-implemented method according to the preceding claim **characterised in that** a plurality of tokens is randomly generated in advance as placeholders and an association between the replaced data string and the replacing token is filed in a table.

13. A computer-implemented method according to claim 11 **characterised in that** tokenisation is effected by a bijective mathematical function which is applied to the data string to be replaced and which provides a unique depiction of the data string on the token and of the token on the unencrypted data string.

14. A computer-implemented method according to claim 11 **characterised in that** a token is generated as the placeholder, wherein generation of the token replacing the data string includes the steps:
preparing a replacement table with random entries, wherein an index of the replacement table is associated with each entry,
dividing the unencrypted data string into two partial strings, wherein the first partial string comprises a character of the unencrypted data string and the second partial string comprises the remaining characters of the unencrypted data string,
calculating an index of the replacement table from the second partial string so that an entry of the replacement table is determined,
generating a replacement character from the entry determined by the index,
replacing the characters of the first partial string by the replacement character,
interchanging the first and second partial strings so that the replaced character of the first partial string becomes the last character or the first character of the second partial string and the first character or the last character of the second partial string becomes the character of the first partial string, and
repeating the foregoing steps so that a token associated with the
unencrypted data string is generated, and
generation of the data string to be restored from the token includes the steps:
preparing the replacement table,
dividing the tokens into two partial strings, wherein the first partial string comprises all characters except the last character of the token and the second partial string only consists of the last character of the token,
calculating an index of the replacement table from the first partial string so that a given entry of the replacement table is determined,
generating the replacement character from the entry of the replacement table, that is determined by the index, so that the character of the second partial string is replaced by the replacement character,
interchanging the first and second partial strings so that the character of the second partial string becomes the first character or the last character of the first partial string and the last character or the first character of the first partial string becomes the character of the second partial string, and
repeating the foregoing steps so that the unencrypted data string associated with the token is restored.

15. A computer program with program code for carrying out a method according to one of the preceding claims.

## Revendications

1. Procédé mis en œuvre par ordinateur pour transférer une chaîne de données à partir d'une application (3) vers un dispositif de protection des données (8), comprenant les étapes consistant à
générer une requête de base de données dans l'application (3),
dans lequel la requête de base de données contient la chaîne de données, et
dans lequel la requête de base de données est codée dans un langage de base de données,
transmettre la requête de base de données à partir de l'application (3) vers un émulateur (13),
convertir la requête de base de données en une tâche de protection des données dans l'émulateur (13),
dans lequel la tâche de protection des données contient la chaîne de données et
dans lequel la tâche de protection des données est codée dans un langage autre que le langage de base de données,
dans lequel l'autre langage est un langage pouvant être interprété par le dispositif de protection des données (8),
transmettre la tâche de protection des données à partir de l'émulateur (13) vers le dispositif de protection des données (8),
appliquer une opération de protection des données à la chaîne de données et exporter une chaîne de réponse dans le dispositif de protection des données (8),
transmettre la chaîne de réponse à partir du dispositif de protection des données (8) vers l'émulateur (13), et
exporter la chaîne de réponse à partir de l'émulateur (13) vers l'application (3) sous la forme d'un résultat, codé dans le langage de base de données, de la requête de base de données.

2. Procédé mis en œuvre par ordinateur selon la revendication précédente, **caractérisé en ce que** le langage de base de données est un langage NoSQL, de manière préférée un langage destiné à une base de données clé-valeur et de manière particulièrement préférée un langage pour Redis.

3. Procédé mis en œuvre par ordinateur selon la revendication 1, **caractérisé en ce que** le langage de base de données est du SQL.

4. Procédé selon l'une quelconque des revendications précédentes, **caractérisé en ce que** le procédé comprend, en outre, les étapes consistant à
générer une commande de configuration de base de données dans l'application (3),
dans lequel la commande de configuration de base de données contient un paramètre de configuration pour l'opération de protection des données, et
dans lequel la commande de configuration de base de données est codée dans le langage de base de données,
transmettre la commande de configuration de base de données à partir de l'application (3) vers l'émulateur (13),
convertir la commande de configuration de base de données en une commande de configuration de protection des données avec le paramètre de configuration dans l'émulateur (13),
dans lequel la commande de configuration de protection des données est codée dans le langage autre que le langage de base de données,
et/ou
insérer un paramètre de configuration destiné à l'opération de protection des données dans la requête de base de données,
convertir la requête de base de données dans l'émulateur (13) de sorte qu'une commande de configuration de protection des données comprenant le paramètre de configuration est formée,
dans lequel la commande de configuration de protection des données est codée dans le langage autre que le langage de base de données,
et
transmettre la commande de configuration de protection des données à partir de l'émulateur (13) vers le dispositif de protection des données (8), et
appliquer l'opération de protection des données à la chaîne de données avec une configuration prédéfinie par le paramètre de configuration.

5. Procédé mis en œuvre par ordinateur selon l'une quelconque des revendications précédentes, **caractérisé en ce que** l'émulateur (13) est réalisé sous forme de serveur proxy.

6. Procédé mis en œuvre par ordinateur selon l'une quelconque des revendications précédentes, **caractérisé en ce que** le dispositif de protection des données (8) est mis en œuvre sur un module de sécurité matériel, dans lequel la tâche de protection des données est codée dans un langage du module de sécurité matériel, ou **en ce que** le dispositif de protection des données (8) est mis en œuvre sur un circuit logique programmable, dans lequel la tâche de protection des données est codée dans un langage du circuit logique programmable.

7. Procédé mis en œuvre par ordinateur selon l'une quelconque des revendications précédentes, **caractérisé en ce que**
le dispositif de protection des données (8) est un dispositif permettant de vérifier un élément de protection des données,
dans lequel la chaîne de données est une représentation chiffrée ou non chiffrée de l'élément de protection des données,
dans lequel l'opération de protection des données est une vérification d'élément de protection des données, et
dans lequel la chaîne de réponse contient des informations sur la validité de l'élément de protection des données,
ou le dispositif de protection des données (8) est un dispositif de signature,
dans lequel la chaîne de données est un élément à signer,
dans lequel l'opération de protection des données est une opération de signature, et
dans lequel la chaîne de réponse contient l'élément signé,
ou le dispositif de protection des données (8) est un dispositif permettant de vérifier une signature,
dans lequel la chaîne de données contient une signature,
dans lequel l'opération de protection des données est une vérification de signature, et
dans lequel la chaîne de réponse contient des informations sur la validité de la signature,
ou le dispositif de protection des données (8) est un dispositif de hachage,
dans lequel la chaîne de données est un élément pour lequel une valeur de hachage doit être générée,
dans lequel l'opération de protection des données génère une valeur de hachage à partir de la chaîne de données, et
dans lequel la chaîne de réponse contient la valeur de hachage.

8. Procédé selon l'une quelconque des revendications 1 à 7, **caractérisé en ce que**
le dispositif de protection des données (8) est un dispositif de remplacement permettant de remplacer une chaîne de données par un substitut,
l'opération de protection des données est une tâche de remplacement, un substitut remplaçant la chaîne de données étant généré dans le dispositif de remplacement, et
la chaîne de réponse est le substitut.

9. Procédé mis en œuvre par ordinateur selon la revendication précédente, **caractérisé en ce qu'**il présente, afin de restaurer la chaîne de données à partir du substitut, les étapes consistant à
générer une requête de base de données dans l'application (3),
dans lequel la requête de base de données contient le substitut, et
dans lequel la requête de base de données est codée dans le langage de base de données,
transmettre la requête de base de données à partir de l'application (3) vers l'émulateur (13),
convertir la requête de base de données en une tâche de restauration dans l'émulateur (13),
dans lequel la tâche de restauration contient le substitut, et
dans lequel la tâche de restauration est codée dans l'autre langage,
transmettre la tâche de restauration vers le dispositif de remplacement,
restaurer la chaîne de données à partir du substitut dans le dispositif de remplacement,
transmettre la chaîne de données à partir du dispositif de remplacement vers l'émulateur (13), et
exporter la chaîne de données à partir de l'émulateur (13) vers l'application (3) sous la forme d'un résultat de la requête de base de données.

10. Procédé mis en œuvre par ordinateur selon la revendication 8 ou 9, **caractérisé en ce que** le substitut est une représentation cryptée de la chaîne de données d'origine.

11. Procédé mis en œuvre par ordinateur selon l'une quelconque des revendications 8 à 10, **caractérisé en ce que** la génération du substitut est basée sur une tokénisation de la chaîne de données, la chaîne de données étant remplacée par un jeton tenant lieu de substitut.

12. Procédé mis en œuvre par ordinateur selon la revendication précédente, **caractérisé en ce qu'**une pluralité de jetons tenant lieu de substituts sont générés à l'avance de manière aléatoire et une association entre la chaîne de données remplacée et le jeton de remplacement est mémorisée dans une table.

13. Procédé mis en œuvre par ordinateur selon la revendication 11, **caractérisé en ce que** la tokénisation intervient grâce à une fonction mathématique bijective qui est appliquée à la chaîne de données à remplacer et qui fournit une représentation univoque de la chaîne de données sur le jeton et du jeton sur la chaîne de données non chiffrée.

14. Procédé mis en œuvre par ordinateur selon la revendication 11, **caractérisé en ce qu'**un jeton est généré en tant que substitut, dans lequel l'étape de génération du jeton remplaçant la chaîne de données comprend les étapes consistant à
fournir une table de remplacement avec des entrées aléatoires, un indice de la table de remplacement étant associé à chaque entrée,
diviser la chaîne de données non chiffrée en deux sous-chaînes, la première sous-chaîne étant constituée d'un caractère de la chaîne de données non chiffrée et la seconde sous-chaîne étant constituée des caractères restants de la chaîne de données non chiffrée,
calculer un indice de la table de remplacement à partir de la seconde sous-chaîne de sorte qu'une entrée de la table de remplacement est déterminée,
générer un caractère de remplacement à partir de l'entrée déterminée par l'indice,
remplacer les caractères de la première sous-chaîne par le caractère de remplacement,
permuter les première et seconde sous-chaînes de sorte que le caractère remplacé de la première sous-chaîne devient le dernier caractère ou le premier caractère de la seconde sous-chaîne et que le premier caractère ou le dernier caractère de la seconde sous-chaîne devient le caractère de la première sous-chaîne, et
répéter les étapes ci-dessus de sorte qu'un jeton associé à la chaîne de données non chiffrée est généré, et
l'étape de génération de la chaîne de données à restaurer à partir du jeton comprend les étapes consistant à
fournir la table de remplacement,
diviser le jeton en deux sous-chaînes, la première sous-chaîne étant constituée de tous les caractères à l'exception du dernier caractère du jeton et la seconde sous-chaîne étant constituée uniquement du dernier caractère du jeton,
calculer un indice de la table de remplacement à partir de la première sous-chaîne, de sorte qu'une entrée déterminée de la table de remplacement est déterminée,
générer un caractère de remplacement à partir de l'entrée, déterminée par l'indice, de la table de remplacement, de sorte que le caractère de la seconde sous-chaîne est remplacé par le caractère de remplacement,
permuter les première et seconde sous-chaînes de sorte que le caractère de la seconde sous-chaîne devient le premier caractère ou le dernier caractère de la première sous-chaîne et que le dernier caractère ou le premier caractère de la première sous-chaîne devient le caractère de la seconde sous-chaîne, et
répéter les étapes ci-dessus de sorte que la chaîne de données non chiffrée associée au jeton est restaurée.

15. Programme informatique avec un code de programme permettant la mise en œuvre d'un procédé selon l'une quelconque des
